# EUROPÄISCHE PATENTSCHRIFT

(11) **EP 1 560 643 B1**
(45) Veröffentlichungstag und Bekanntmachung des Hinweises auf die Patenterteilung: **23.01.2008**
(21) Anmeldenummer: 03769194.6
(22) Anmeldetag: 16.09.2003
(51) Int. Cl.: B01J 4/02

(54) **DOSIEREINRICHTUNG**
DOSING DEVICE
DISPOSITIF DE DOSAGE

(30) Priorität: 06.11.2002 DE 10251699
(43) Veröffentlichungstag der Anmeldung: 10.08.2005
(73) Patentinhaber: ROBERT BOSCH GMBH, 70442 Stuttgart (DE)
(72) Erfinder: MILLER, Frank, 74360 Ilsfeld (DE); ALBRODT, Hartmut, 71732 Tamm (DE)
(86) Internationale Anmeldenummer: PCT/DE2003/003070
(87) Internationale Veröffentlichungsnummer: WO 2004/041422

(56) Entgegenhaltungen:
- EP-A- 1 335 127
- WO-A-02/42635
- WO-A-20/04035467
- WO-A-20/04036119

## Beschreibung

### Stand der Technik

Die Erfindung geht aus von einer Dosiereinrichtung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen wie beispielsweise Benzin, Ethanol oder Methanol sog. chemische Reformer zum Einsatz. Zur Wärmeerzeugung, insbesondere in Kaltstartphasen, kommen Nachbrenneinrichtungen zum Einsatz.

Alle vom Reformer zum Reaktionsablauf benötigten Stoffe, wie z.B. Luft, Wasser und Kraftstoff, werden dem Reaktionsbereich idealerweise in gasförmigem oder zumindest zerstäubten Zustand zugeführt. Da aber die Kraftstoffe, wie z.B. Methanol oder Benzin, und Wasser, an Bord des Transportsystems vorzugsweise in flüssiger Form vorliegen, müssen sie erst, kurz bevor sie zum Reaktionsbereich des Reformers oder der Nachbrenneinrichtung gelangen, aufbereitet werden. Dies erfordert beispielsweise eine Dosiereinrichtung, welche in der Lage ist, die entsprechenden Mengen Kraftstoff oder anderer Stoffe fein zerstäubt zur Verfügung zu stellen.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zuführungsleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozess notwendig ist, in den Reaktionsbereich des Reformers. Durch die lange Zuführungsleitung kann die Zumeßeinrichtung von thermischen Einflüssen des Reformers isoliert werden. Zerstäubungsdüsen fur Kraftstoffe werden in WO 2004/035467 sowie WO 2004/036119 beschrieben.

Nachteilig bei den aus der obengenannten Druckschrift bekannten Vorrichtungen ist insbesondere, daß unterhalb der Betriebstemperatur des Reformers, beispielsweise in einer Kaltstartphase, die Zerstäubung des Kraftstoffes nur unzureichend erfolgt und die Dosiereinrichtung sehr aufwendig und raumverbrauchend aufgebaut ist. Durch die dabei entstehende relativ geringe Reaktionsfläche zwischen Kraftstoff und Oxidant erfolgt die Verbrennung bzw. chemische Reaktion nur langsam und zumeist auch unvollständig. Der Wirkungsgrad sinkt dadurch deutlich und die schadstoffemissionen steigen unvorteilhaft an. Unvollständige Verbrennung bzw. eine unvollständige chemische Reaktion führt meist zur Bildung von aggressiven chemischen Verbindungen, welche den chemischen Reformer bzw. die Nachbrenneinrichtung schädigen können und zu Ablagerungen, die die Funktion beeinträchtigen können. Die aufwendige und raumverbrauchende Konstruktion im Düsenbereich, wo die Zerstäubung erfolgt, führt zu hohen Herstellungs- und Betriebskosten, insbesondere infolge einer schlechteren Montagefreundlichkeit und höheren Fehleranfälligkeit.

### Vorteile der Erfindung

Die erfindungsgemäße Dosiereinrichtung mit den kennzeichnenden Merkmalen des Hauptanspruchs hat demgegenüber den Vorteil, daß die Zerstäubung und Verteilung des Kraftstoffes bzw. des Kraftstoff-Gas-Gemisches wesentlich verbessert wird. Dadurch kann beispielsweise die Kaltstartphase wesentlich verkürzt werden und schon während der Kaltstartphase der Wirkungsgrad der Nachbrenneinrichtung bzw. des chemischen Reformers deutlich gesteigert werden. Die Schadstoffemissionen sind dabei wesentlich reduziert. Durch die erfindungsgemäße Dosiereinrichtung ist es weiterhin möglich die Dosiereinrichtung sehr einfach, zuverlässig damit kostengünstig herzustellen, außerdem können standardisierte serienmäßig gefertigte Bauteile, beispielsweise aus der Serienproduktion bekannter Brennstoff-Einspritzventilen, verwenden werden.

Durch die in den Unteransprüchen aufgeführten Maßnahmen sind vorteilhafte Weiterbildungen der im Hauptanspruch angegebenen Dosiereinrichtung möglich.

In einer ersten Weiterbildung der erfindungsgemäßen Dosiereinrichtung, ist der Spritzlocheinsatz in Form einer Spritzlochscheibe ausgebildet.

In einer weiteren vorteilhaften Weiterbildung ist der Düsenkörper rohrförmig, insbesondere zylinderrohrförmig, geformt. Dadurch läßt er sich besonders einfach und damit kostengünstig beispielsweise aus einem standardisierten Edelmetallrohr herstellen oder aus anderen standardisierten Halbzeugen.

Vorteilhaft ist es weiterhin, wenn der Düsenkörper aus mehreren Teilen, insbesondere aus einem rohrförmigen Trägerelement und einem rohrförmigen Zuführungsrohr, die über ein rohrförmiges Zwischenelement hydraulisch dicht verbunden sind, besteht. Die Teile des Düsenkörpers lassen sich so einfach und kostengünstig verschiedenen Belastungen und Bedingungen anpassen.

Vorteilhafterweise wird abspritzseitig des rohrförmigen Trägerelements ein ringförmiges Sitzelement und der in Abspritzrichtung nach dem Sitzelement liegender Spritzlocheinsatz mit darin befindlichen Abspritzöffnungen angeordnet. Dadurch läßt sich der abspritzseitige Teil des Düsenkörpers besonders einfach herstellen, insbesondere können dadurch auch Düsenkörper wie sie aus der Serienfertigung von Brennstoff-Einspritzventilen bekannt sind, mit nur geringfügigen oder keinen Modifikationen, verwendet werden.

Vorteilhaft ist zudem, das Sitzelement und den Spritzlocheinsatz mit dem Trägerelement an ihren Außenumfängen insbesondere durch Pressen oder Schweißen, insbesondere Laserschweißen, hydraulisch dicht zu fügen. Dadurch kann die Fügestelle den jeweiligen Anforderungen leicht angepaßt werden.

Vorteilhafterweise sind die Zumeßleitung und die Zumeßeinrichtung durch einen Adapter hydraulisch dicht und lösbar gefügt. Dadurch erhöht sich die Montagefreundlichkeit.

In einer weiteren Weiterbildung weist der die Zumeßleitung und die Zumeßeinrichtung verbindende Adapter eine Luftzuführung auf, wobei die Luftzuführung im Adapter mit der Zumeßleitung verbunden ist. Dadurch läßt sich bereits in der Zuführungsleitung die Gemischaufbereitung einleiten, wobei der in die Zuführungsleitung eingemessene Kraftstoff und/oder das eingemessene Gas mit Luft gemischt wird. Die Zerstäubung und Gemischbildung von Kraftstoff und/oder dem eingemessenen Gas mit Luft wird dadurch insgesamt verbessert.

Vorteilhafterweise wird als Zumeßeinrichtung ein Brennstoffeinspritzventil eingesetzt, wie es z.B. für Hubkolbenmaschinen mit innerer Verbrennung benutzt wird. Der Einsatz solcher Ventile hat mehrere Vorteile. So lassen sie eine besonders genaue Steuerung bzw. Regelung der Kraftstoffzumessung zu, wobei die Zumessung über mehrere Parameter, wie z.B. Tastverhältnis, Taktfrequenz und ggf. Hublänge, gesteuert werden kann. Dabei ist die Abhängigkeit vom Pumpendruck weit weniger ausgeprägt, als bei Zumeßeinrichtungen, die über den Leitungsquerschnitt den Volumenstrom des Kraftstoffs steuern und der Dosierbereich ist deutlich größer.

Darüber hinaus sind die Brennstoffeinspritzventile vielfach bewährte, in ihrem Verhalten bekannte, kostengünstige, gegenüber den verwendeten Kraftstoffen chemisch stabile und zuverlässige Bauteile, wobei dies im besonderen für sog. Niederdruck-Brennstoffeinspritzventile zutrifft, die aufgrund der thermischen Entkopplung durch die Zumeßleitung hier gut einsetzbar sind.

Die Zuführungsleitung weist vorteilhafterweise eine Anzahl wandstärkereduzierter Stellen auf, die die Wärmeleitfähigkeit der Zuführungsleitung herabsetzten bzw. auch als Kühlkörper dienen können.

Durch den mehrteiligen Aufbau der Dosiereinrichtung ist eine kostengünstige Herstellung und der Einsatz von standardisierten Bauteilen möglich.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Darstellung eines ersten Ausführungsbeispiels einer erfindungsgemäßen Dosiereinrichtung und
- Fig. 2: eine schematische Schnittdarstellung des Düsenkörpers des ersten Ausführungsbeispiels

### Beschreibung der Ausführungsbeispiele

Nachfolgend wird ein Ausführungsbeispiel der Erfindung beispielhaft beschrieben.

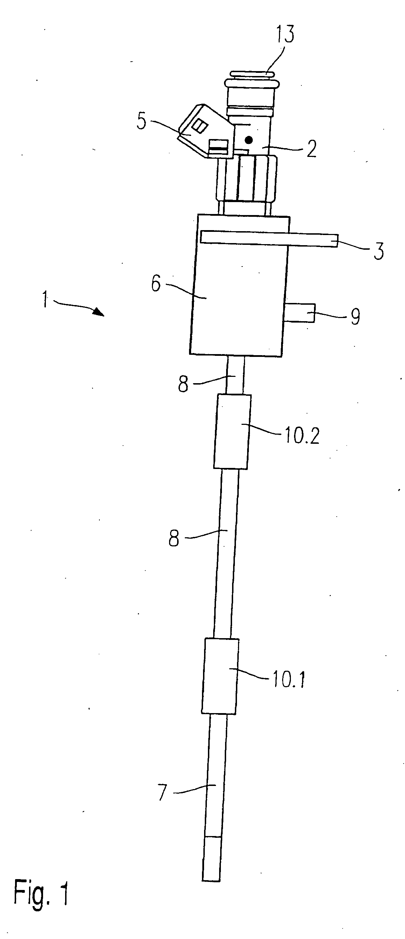

Ein in Fig. 1 dargestelltes Ausführungsbeispiel einer erfindungsgemäßen Dosiereinrichtung 1 ist in der Form einer Dosiereinrichtung 1 für die Verwendung von Niederdruck-Brennstoffeinspritzventilen ausgeführt. Die Dosiereinrichtung 1 eignet sich insbesondere zum Eintrag und zur, Zerstäubung von Kraftstoff bzw. eines Kraftstoff-Gas-Gemisches in einen nicht dargestellten Zumeßraum eines nicht weiter dargestellten chemischen Reformers zur Gewinnung von Wasserstoff oder einer nicht weiter dargestellten Nachbrenneinrichtung zur Erzeugung von Wärme, wobei eine Benetzung der Innenwandung des nicht dargestellten Zumeßraums mit Kraftstoff teilweise oder völlig verhindert werden kann.

Die Dosiereinrichtung 1 besteht aus einer Zumeßeinrichtung 2, welche in diesem Ausführungsbeispiel als Niederdruck-Brennstoffeinspritzventil ausgeführt ist, einem Adapter 6 zur Aufnahme der Zumeßeinrichtung 2 und einer rohrförmigen, beispielsweise 10 bis 100 cm langen Zumeßleitung 8, einer Luftzuführung 9 und einem Düsenkörper 7. Die Zumeßeinrichtung 2 ist rohrförmig und weist an ihrer Oberseite einen Kraftstoffanschluß 13 auf. Seitlich weist die Zumeßeinrichtung 2 einen elektrischen Anschluß 5 auf. An der Unterseite der Zumeßeinrichtung 2 erfolgt die Zumessung von Kraftstoff oder eines Kraftstoff-Gas-Gemisches in die Zumeßleitung 8, wobei der Adapter 6 die Zumeßeinrichtung 2 und die Zumeßleitung 8 nach außen hydraulisch dicht miteinander verbindet. Die rohrförmige Luftzuführung 9 mündet in den Adapter 6 und steht so mit der Zuführungsleitung 8 in Verbindung.

Das der Zumeßleitung 8 zugewandte hohlzylindrisch geformte Ende des Düsenkörpers 7 ist über ein hohlzylindrisch geformtes erstes Verbindungselement 10.1 mit der Zumeßleitung 8 hydraulisch dicht verbunden. Die Zumeßleitung 8 selbst besteht beispielsweise aus einem standardisierten, aus Edelstahl bestehenden, Metallrohr. In diesem Ausführungsbeispiel ist die Zumeßleitung 8 zweiteilig ausgeführt, wobei der dem Adapter 6 zugewandte Teil der Zumeßleitung 8 durch ein zweites Verbindungselement 10.2 mit dem dem Düsenkörper 7 zugewandten Teil der Zumeßleitung 8 verbunden ist. Der untere Teil der Zumeßeinrichtung 2 greift in den Adapter 6 ein und ist durch ein Befestigungselement 3 in Form einer Klammer hydraulisch dicht mit dem Adapter 6 verbunden.

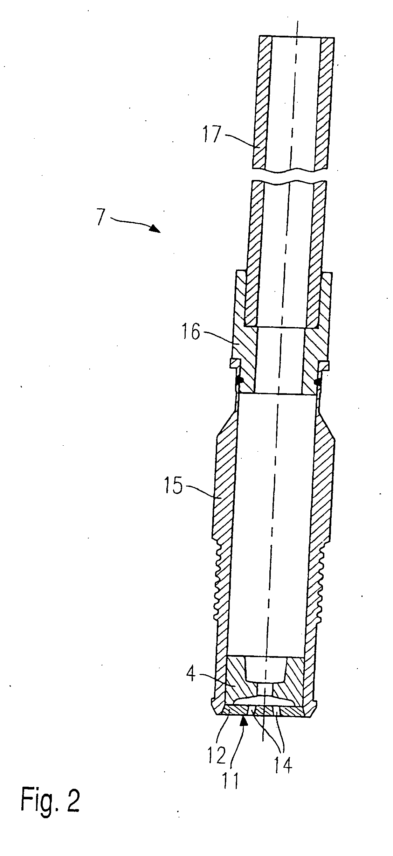

Der Düsenkörper 7 weist in seinem abspritzseitigen der Zumeßleitung 8 abgewandten Ende ein in Fig. 2 dargestelltes ringförmiges Sitzelement 4 und einen in Abspritzrichtung danach liegenden Spritzlocheinsatz 11 mit zumindest einer Abspritzöffnung 14 auf.

Der Zumeßeinrichtung 2 wird über den an der Oberseite der Zumeßeinrichtung 2 liegenden Kraftstoffanschluß 13 Kraftstoff, beispielsweise Benzin, Ethanol oder Methanol, von einer nicht dargestellten Kraftstoffpumpe und Kraftstoffleitung druckbehaftet zugeführt. Der Kraftstoff strömt bei Betrieb der Dosiereinrichtung 1 nach unten und wird durch den im unteren Ende der Zumeßeinrichtung 2 liegenden, nicht dargestellten Dichtsitz in bekannter Weise durch Öffnen und Schließen des Dichtsitzes in die Zuführungsleitung 8 eingemessen. Durch die seitlich nahe der Zumeßeinrichtung 2 über den Adapter 6 in die Zuführungsleitung 8 mündende Luftzuführung 9 können zur Gemischaufbereitung Luft oder andere Gase, beispielsweise brennbare Restgase aus einem Reformierungs- oder Brennstoffzellenprozeß, zugeführt werden. Im weiteren Verlauf strömt der Kraftstoff bzw. das Kraftstoff-GasGemisch durch die Zuführungsleitung 8 zum Düsenkörper 7 und wird dort durch die in Fig. 2 dargestellten Abspritzöffnungen 14 in den nicht dargestellten Zumeßraum eindosiert.

Durch die Zumeßleitung 8 wird die Zumeßeinrichtung 2, insbesondere der gegenüber hohen Temperaturen und großen Temperaturschwankungen empfindliche nicht dargestellte Dichtsitz der Zumeßeinrichtung 2, thermisch von den Temperaturen im nicht dargestellten Zumeßraum, welche beispielsweise 500 °C betragen, entkoppelt. Die Länge, das Material und die Form der Zumeßleitung 8 werden insbesondere entsprechend der thermischen und räumlichen Gegebenheiten gewählt. Vorzugsweise kann die Zumeßleitung 8 auch wandstärkereduzierte Stellen aufweisen, welche zur thermischen Isolierung beitragen oder als Kühlkörper wirken können.

Fig. 2 zeigt eine schematische Schnittdarstellung des Düsenkörpers 7 des ersten Ausführungsbeispiels.

Der Düsenkörper 7 besteht aus einem Trägerelement 15, einem Zuführungsrohr 17 und einem das Trägerelement 15 und das Zuführungsrohr 17 hydraulisch dicht verbindenden Zwischenelement 16. Alle drei genannten Bauteile 15, 17, 16 sind jeweils hohlzylindrisch geformt und aus Metall bestehend.

Das Zuführungsrohr 17, welches mit der in Fig. 1 gezeigten Zuführungsleitung 8 durch das erste Verbindungselement 10.1 verbunden ist, wird von dem ihm zugewandten Ende des Zwischenelements 16 an dem vom ersten Verbindungselement 10.1 abgewandten Ende umfaßt. Das Trägerelement 15 umfaßt mit seinem dem Zwischenelement 16 zugewandten Ende das ihm zuwandte Ende des Zwischenelements 16. Das Zwischenelement 16 ist mit dem Trägerelement 15 und dem Zuführungsrohr 17 durch Pressen, Löten oder Schweißen, insbesondere Laserschweißen, hydraulisch dicht gefügt. Die Verbindung kann auch durch eine Schraubverbindung realisiert werden.

In dem dem Zwischenelement 16 abgewandten abspritzseitigen Ende des Trägerelements 15 befindet sich das ringförmige Sitzelement 4 und der dazu abspritzseitig angeordnete Spritzlocheinsatz 11, welcher in diesem Ausführungsbeispiel als Spritzlochscheibe 12 ausgebildet ist. Die Anordnung von Trägerelement 15, Sitzelement 4 und Spritzlochscheibe 12 ähnelt oder entspricht dem abspritzseitigen Aufbau eines Brennstoff-Einspritzventils wie es aus Hubkolbenmaschinen mit innerer Verbrennung aus dem Kraftfahrzeugbereich bekannt ist. Jedoch fehlt die dort verwendete Ventilnadel mit dem Ventilschließkörper, welcher abspritzseitig mit dem Sitzelement 4 einen Dichtsitz bilden würde.

Vorteilhaft kann diese Anordnung, kostengünstig auch als Düsenkörper 7 in der vorliegenden Erfindung benutzt werden. Insbesondere stehen so für den Düsenkörper 7 zahlreiche bereits serienmäßig gefertigte, sehr verfügbare und damit kostengünstige Spritzlochscheiben oder Stufenscheiben zur Verfügung. Durch die Anordnung der Abspritzöffnungen 14 in der Spritzloch- bzw. Stufenscheibe kann die austretende Kraftstoffwolke in ihrer Form und Ausdehnung vorteilhaft beeinflußt und mit einem Drall beaufschlagt werden.

## Patentansprüche

1. Dosiereinrichtung (1) für flüssige Kraftstoffe, insbesondere zum Eintrag in einen chemischen Reformer zur Gewinnung von Wasserstoff oder in eine Nachbrenneinrichtung zur Erzeugung von Wärme, mit zumindest einer Zumeßeinrichtung (2) zum Zumessen von Kraftstoff in eine Zumeßleitung (8) und mit einem sich an die Zumeßleitung (8) anschließenden Düsenkörper (7), der zumindest eine Abspritzöffnung (14) aufweist, die in einen Zumeßraum ausmündet,
**dadurch gekennzeichnet,**
**daß** der Düsenkörper (7) einen Spritzlocheinsatz (11) aufweist, in welchem die zumindest eine Abspritzöffnung (14) angeordnet ist.

2. Dosiereinrichtung nach Anspruch 1,
**dadurch gekennzeichnet,**
**daß** der Spritzlocheinsatz (11) in Form einer Spritzlochscheibe (12) ausgebildet ist.

3. Dosiereinrichtung nach Anspruch i oder 2,
**dadurch gekennzeichnet,**
**daß** der Düsenkörper (7) rohrförmig, insbesondere zylinderrohrförmig, ist.

4. Dosiereinrichtung nach Anspruch 1, 2 oder 3,
**dadurch gekennzeichnet,**
**daß** der Düsenkörper (7) aus einem rohrförmigen Trägerelement (15) und einem rohrförmigen Zuführungsrohr (17) besteht, die über ein rohrförmiges Zwischenelement (16) hydraulisch dicht verbunden sind.

5. Dosiereinrichtung nach Anspruch 4,
**dadurch gekennzeichnet,**
**daß** abspritzseitig des rohrförmigen Trägerelements (15) ein ringförmiges Sitzelement (4) und das in Abspritzrichtung danach liegender Spritzlocheinsatz (11) mit darin angeordneten Abspritzöffnungen (14) angeordnet ist.

6. Dosiereinrichtung nach Anspruch 5,
**dadurch gekennzeichnet,**
**daß**, das Sitzelement (4) und der Spritzlocheinsatz (11) mit dem Trägerelement (15) an ihren Außenumfängen insbesondere durch Pressen oder Schweißen, insbesondere Laserschweißen, hydraulisch dicht gefügt sind.

7. Dosiereinrichtung nach einem der vorangegangenen Ansprüche,
**dadurch gekennzeichnet,**
**daß** die Zumeßleitung (8) und die Zumeßeinrichtung (2) durch einen Adapter (6) hydraulisch dicht und lösbar gefügt sind.

8. Dosiereinrichtung nach Anspruch 7,
**dadurch gekennzeichnet,**
**daß** der Adapter (6) eine Luftzuführung (9) aufweist, die im Adapter (6) mit der Zumeßleitung (8) in Verbindung steht.

9. Dosiereinrichtung nach einem der vorangegangenen Ansprüche,
**dadurch gekennzeichnet,**
**daß** die Zumeßeinrichtung (2) ein Brennstoffeinspritzventil ist.

10. Dosiereinrichtung nach einem der vorangegangenen Ansprüche,
**dadurch gekennzeichnet,**
**daß** das Brennstoffeinspritzventil ein Niederdruck-Brennstoffeinspritzventil ist, welches mit Brenn- bzw. Kraftstoffdrücken von bis zu 10 bar arbeitet.

11. Dosiereinrichtung nach einem der vorangegangenen Ansprüche,
**dadurch gekennzeichnet,**
**daß** die Zumeßleitung (8) in ihrem axialen Verlauf zumindest eine wandstärkereduzierte Stelle oder einen wandstärkereduzierten Bereich aufweist.

## Claims

1. Dosing device (1) for liquid fuels, in particular for introducing said liquid fuels into a chemical reformer in order to obtain hydrogen or into an afterburner device in order to generate heat, having at least one metering device (2) for metering fuel into a metering line (8) and having a nozzle body (7) which adjoins the metering line (8) and which has at least one ejection opening (14) which opens out into a metering space,
**characterized**
**in that** the nozzle body (7) has a spray hole insert (11) in which the at least one ejection opening (14) is arranged.

2. Dosing device according to Claim 1,
**characterized**
**in that** the spray hole insert (11) is designed in the form of a spray hole plate (12).

3. Dosing device according to claim 1 or 2,
**characterized**
**in that** the nozzle body (7) is tubular, in particular cylindrical-tube-shaped.

4. Dosing device according to Claim 1, 2 or 3,
**characterized**
**in that** the nozzle body (7) is composed of a tubular support element (15) and a tubular inlet tube (17) which are connected in a hydraulically sealed manner by means of a tubular intermediate element (16).

5. Dosing device according to Claim 4,
**characterized**
**in that** an annular seat element (4), and the spray hole insert (11) which is situated downstream thereof in the ejection direction and has the ejection openings (14) arranged therein, is arranged at the ejection side of the tubular support element (15).

6. Dosing device according to Claim 5,
**characterized**
**in that** the seat element (4) and the spray hole insert (11) are joined in a hydraulically sealed manner to the support element (15) at their outer peripheries in particular by means of pressing or welding, in particular laser welding.

7. Dosing device according to one of the preceding claims,
**characterized**
**in that** the metering line (8) and the metering device (2) are joined in a hydraulically sealed and detachable manner by means of an adapter (6).

8. Dosing device according to Claim 7,
**characterized**
**in that** the adapter (6) has an air inlet (9) which is connected in the adapter (6) to the metering line (8).

9. Dosing device according to one of the preceding claims,
**characterized**
**in that** the metering device (2) is a fuel injection valve.

10. Dosing device according to one of the preceding claims.
**characterized**
**in that** the fuel injection valve is a low-pressure fuel injection valve which operates with fuel pressures of up to 10 bar.

11. Dosing device according to one of the preceding claims,
**characterized**
**in that** the metering line (8) has at least one point of reduced wall thickness or one region of reduced wall thickness in its axial profile.

## Revendications

1. Installation de dosage (1) de carburants liquides notamment pour un réformeur chimique générant de l'hydrogène ou une installation de postcombustion dégageant de la chaleur, comprenant au moins une installation de distribution mesurée (2) pour distribuer de façon mesurée du carburant dans une conduite de dosage (8) et un corps de buse (7) relié à la conduite de distribution (8) qui comporte au moins un orifice d'éjection (14) débouchant dans une chambre de distribution mesurée,
**caractérisée en ce que**
le corps de buse (7) comporte un insert à orifices d'éjection (11) muni d'au moins un orifice d'éjection (14).

2. Installation de dosage selon la revendication 1,
**caractérisée en ce que**
l'insert à orifices d'éjection (11) est réalisé sous la forme d'un disque à orifices d'éjection (12).

3. Installation de dosage selon l'une des revendications 1 ou 2,
**caractérisée en ce que**
le corps de buse (7) est de forme tubulaire notamment de forme tubulaire cylindrique.

4. Installation de dosage selon l'une des revendications 2 ou 3,
**caractérisée en ce que**
le corps de buse (7) est formé d'un élément de support (15) tubulaire et d'un tube d'alimentation (17) tubulaire, ces deux éléments étant reliés de manière étanche du point de vue hydraulique, par un élément intermédiaire (16) tubulaire.

5. Installation de dosage selon la revendication 4,
**caractérisée en ce que**
du côté de l'éjection de l'élément de support tubulaire (15), il est prévu un élément formant siège (4), annulaire et l'insert à orifices d'éjection (11), situé en aval dans le sens de l'éjection, est muni d'orifices d'éjection (14).

6. Installation de dosage selon la revendication 5,
**caractérisée en ce que**
l'élément formant siège (4) et l'insert à orifices d'éjection (11) sont assemblés de manière étanche du point de vue hydraulique à la périphérie extérieure de l'élément de support (15) en particulier par compression ou soudage notamment soudage par laser.

7. Installation de dosage selon l'une des revendications précédentes,
**caractérisée en ce que** la conduite de distribution mesurée (8) et l'installation de distribution mesurée (2) sont assemblées de manière étanche hydrauliquement et de façon amovible par un adaptateur (6).

8. Installation de dosage selon la revendication 7,
**caractérisée en ce que**
l'adaptateur (8) comporte une conduite d'alimentation en air (9) qui communique avec la conduite de distribution mesurée, (8) dans l'adaptateur (6).

9. Installation de dosage selon l'une des revendications précédentes,
**caractérisée en ce que**
l'installation de distribution mesurée (2) est un injecteur de carburant.

10. Installation de dosage selon l'une des revendications précédentes,
**caractérisée en ce que**
l'injecteur de carburant est un injecteur basse pression, fonctionnant avec des pressions de combustion ou de carburant allant jusqu'à 10 bars.

11. Installation de dosage selon l'une des revendications précédentes,
**caractérisée en ce que**
la conduite de distribution mesurée (8) a, dans son tracé axial, au moins un point à épaisseur de paroi réduite ou une zone dont l'épaisseur de paroi est réduite.
